# EUROPÄISCHE PATENTSCHRIFT

(11) **EP 2 504 280 B1**
(45) Veröffentlichungstag und Bekanntmachung des Hinweises auf die Patenterteilung: **11.03.2015**
(21) Anmeldenummer: 10805579.9
(22) Anmeldetag: 24.11.2010
(51) Int. Cl.: C01F 7/16, C04B 38/00, C09K 21/02, C04B 28/06, C04B 35/44, C04B 35/66, C04B 35/443

(54) **ALKALIRESISTENTER ERDALKALI-ALUMINIUM-WÄRMEDÄMMSTOFF, VERFAHREN ZU SEINER HERSTELLUNG UND SEINE VERWENDUNG**
ALKALI-RESISTANT ALKALINE-EARTH/ALUMINUM THERMAL-INSULATION MATERIAL, METHOD FOR THE PRODUCTION THEREOF, AND USE THEREOF
MATÉRIAU CALORIFUGE À BASE D'ALUMINIUM ALCALINOTERREUX RÉSISTANT AUX ALCALINS, SON PROCÉDÉ DE FABRICATION ET SON UTILISATION

(30) Priorität: 26.11.2009 DE 102009055723
(43) Veröffentlichungstag der Anmeldung: 03.10.2012
(73) Patentinhaber: Calsitherm Verwaltungs Gmbh, 33175 Bad Lippspringe (DE)
(72) Erfinder: HÖLSCHER, Klaus, 33175 Bad Lippspringe (DE); HÖLSCHER, Tobias, 33102 Paderborn (DE); SCHLEGEL, Emst, 09599 Freiberg (DE); STELLMACH, Winfried, 33175 Bad Lippspringe (DE); SCHNEIDER, Hans-Jürgen, 09600 Oberschöna (DE)
(86) Internationale Anmeldenummer: PCT/DE2010/001364
(87) Internationale Veröffentlichungsnummer: WO 2011/063791

(56) Entgegenhaltungen:
- WO-A1-2004/054742
- DD-A5- 296 477
- DE-A1-102005 052 380
- Karen L. SCRIVENER, Alain CAPMAS: "Calcium Aluminates Cements" In: Peter C. HEWLETT: "Chemistry of Cement and Concrete - 4th Edition", 1998, Butterworth-Heinemann, Oxford, XP002631894, ISBN: 0340565896 Seiten 718-723, Seite 718; Abbildung 13.2 Seite 723, Absatz 13.5.2
- HOLSCHER T ET AL: "CALUTHERM - A hydrothermally cured thermal insulation material based on hibonite - CALUTHERM Ein hydrothermal hergestellter Wärmedämmstoff auf der Basis von Hibonit", KERAMISCHE ZEITSCHRIFT, DVS VERLAG, DUESSELDORF, DE, Bd. 60, Nr. 2, 1. März 2008 (2008-03-01), Seiten 88-91, XP008134936, ISSN: 0023-0561

## Beschreibung

Die Erfindung betrifft einen Wärmedämmstoff aus porösem Erdalkali-Aluminat zur Verwendung in Feuerungsanlagen mit alkalischen Verbrennungsgasen einer Temperatur von 1000 °C bis 1300 °C und ein Herstellungsverfahren desselben.

Aus der DE 10 2005 052 380 B4 ist ein derartiges Aluminat sowie dessen Verwendung als Formkörper und dessen Herstellverfahren bekannt, das aus hochporösem Alkali-β-Aluminat oder einer entsprechenden autoklavierten Vorstufe desselben besteht. Dieses hat einen außerordentlich hohen Anteil von sehr teurem Aluminiumoxid, der β₂-tonerde, zu einem Teil Alkalioxid, wie beispielsweise in Na₂O · 11 Al₂ O₃. Zudem werden bei einer Nassaufbereitung die wasserlöslichen Alkali-Ausgangsstoffe beim Abpressen mit dem Filtrat zum Teil entfernt, die die Filtervliese verstopfen, die dann mit erheblichem Spülwasseraufwand nach jedem Pressvorgang daraus entfernt und zurückgewonnen werden müssen, was zeit- und kostenaufwendig ist.

Aus der DE 20 55 024 A1 sind weiterhin verschiedene Verfahren zur Herstellung von feuerfesten und gegen alkalische Atmosphären widerstandsfähigen Alkalialuminaten, insbesondere Natrium-Aluminat, das wegen seiner Ionenleitfähigkeit als Batterie- und Akkumulatorwerkstoff genutzt wird, bekannt. Die Herstellungsverfahren beruhen auf einer Homogenisierung einer Mischung der Oxide oder Hydroxide der Ausgangsstoffe, vorzugsweise in stöchiometrischer Mischung entsprechend MₓO_{y} · 11 Al₂O₃ mit x = 1 oder 2; y = 1 oder 3, wobei M ein Alkalimetall ist, und auf einer anschließenden Sinterung bei Temperaturen bis 1600 °C oder höher. Dabei entsteht ein sehr dichtes, als Wärmedämmung ungeeignetes Sintermaterial - die Dichte beträgt etwa 3,2 g/cm³ - indem die Ausgangsmischung von Natrium- und Aluminiumausgangsstoffen zahlreiche Zwischenstufen durchläuft und dabei in verschiedenen Formen und Übergangsstufen auftritt. Störungen treten dabei u.U. durch die Bildung von m-Al₂O₃ oder NaAlO₂ Kristallkeimen auf, die später, insbesondere bei Temperaturwechselbelastungen, zu fortschreitenden Rissen im Sinterkörper und bei mechanischer Belastung zum Zerfall führen. Insbesondere eine Wanderung der Natriumionen aus dem Inneren in die Randzone führt zu einem Konzentrationsgefälle und damit zu einer ungleichen Kristallbildung und Phasenausbildung im Sinterkörper.

Weiterhin ist aus: Hölscher, T. et.al.: "Calutherm® - Ein hydrothermal hergestellter Wärmedämmstoff auf der Basis von Hibonit", Keramische Zeitschrift, DVS-Verlag, Düsseldorf, Bd. 60, Nr. 2, 1.März 2008, S. 88-91, ein weiterer Aluminat-Wärmedämmstoff unter der Marke Calutherm® bekannt; dieser ist ein mikroporöses Calcium-Aluminat auf der Basis von Hibonit, dem CaAl₁₂O₁₉, das insbesondere in Form von Formteilen, wie Rinnen, Rohren und Ringen, der Leitung von NE-Metallschmelzen dient. Die Herstellung der hochgradig mikroporösen und makroporenfreien Formteile erfolgt durch eine Autoklavierung einer wässrigen Aufschlämmung aus entsprechenden Oxiden, Hydroxiden oder dgl. und anschließender Trocknung. Derartige mikroporöse autoklavierte CA₆-Materialien haben den Vorteil, dass Kristallkeime und Phasengrenzen nur eine kurze Wachstumsstrecke verfügbar haben und bis 1500 °C eingesetzt werden können. Sie haben eine Beständigkeit auch gegen solche alkalihaltigen Verbrennungsgase, die in Feuerungsanlagen, insbesondere bei einer Abfallverbrennung oder Zementherstellung, anfallen. Aufgrund des CaO - Al₂O₃ - Schmelzdiagrammes wurde vermutet, dass eine Hochtemperatur-Verwendbarkeit nur bei einem hohen Aluminiumoxidgehalt des Calcium-Aluminats vorliegt.

Weiterhin ist aus der WO 2004/054742 A1 ein hochtemperaturbeständiges Abdeckmittel für ein Schmelzbad in der Stahlindustrie bekannt. Das Abdeckmittel besteht aus porösem Granulat, dessen Kalziumoxidanteil zu Aluminiumoxidanteil zwischen 0,25 bis 4, insbesondere 1,0 bis 1,5 , liegt. Die Anwendung erfordert keine Beständigkeit gegen Alkalidämpfe. Vielmehr erfordert die Anwendung, dass das Mittel auf der Metallschmelze teilweise einen flüssigen Film bildend aufschmilzt, das in Stoffaustausch zur Schmelze tritt, und es darüber eine Wärmedämmung als Granulat erbringt. Deshalb enthält das Mittel bis 15 % Nebenphasen aus Magnesium-, Silicium-, Eisen-, Titan- und/oder Alkalioxiden.

Die Porosität beträgt 5 - 70 % und wird durch Aufmahlen der Rohstoffe auf eine Feinheit von < 90 µm sowie ein Ausbrennen von Holz- und Papierstoff aus einer Aufschlämmung oder deren Aufschäumung oder Aufblähung sowie Calcinierung hergestellt, so dass wegen der dadurch entstehenden relativ großen Poren nur eine moderate Wärmedämmung erreicht wird. Insbesondere fehlt dem großporigen und von Nebenphasen durchsetzten Material jegliche Widerstandsfähigkeit gegen das Eindringen von Alkalidämpfen, die zur Zerstörung führen würden.

Weiterhin ist aus der DD 296 477 A5 ein Calcium-Aluminat-Wärmedämmstoff, insbesondere aus Calcium-Hexaaluminat CA₆ bekannt, der als poröse Zuschlagkörnung für den Industrieofenbau in Hochtemperaturanlagen bekannt ist. Dieser Dämmstoff weist ein Mikorporenvolumen von 0,2 bis 0,95 Volumenanteilen auf, das durch eine Autoklavbehandlung einer wässrigen Aufschlämmung der Ausgangsstoffe, bei Fehlen von Ausbrennstoffen und Schaumbildnern, welche Porengrößen von 100 bis 1000 µm erzeugen würden, und nach einer Trocknung sowie einem Brennen bei über 1000 °C erreicht wurde. Durch anschließendes Mahlen wird das so vorbehandelte Material auf eine geeignete Arbeitskörnung gebracht. Eine unmittelbare Verwendung des hydrothermal autoklavierten Materials im Ofenbau, das aufgrund seiner Mikroporosität, mit einer Porengröße von < 10 µm hoch wärmedämmend ist, war jedoch wegen seiner erheblichen Schwindung nicht angezeigt, da Rissbildung und Gasdurchlässigkeit auftraten. Nur durch Zugabe vorgebrannter mikroporöser Leichtzuschläge konnte eine Erhöhung der Anwendungstemperatur erreicht werden.

Weiterhin ist aus der DD 206 142 A ein Ofenleichtbaustoff auf der Basis von aluminiumhaltigen feinkörnigen Zuschlagstoffen für Anwendungen über 1000 °C bis 1500 °C bekannt, bei dessen Herstellung Erdalkalihydroxid und Aluminiumhydroxid, sowie 5 - 95 % Füllstoffe und Schäummittel oder Aluminiumpulver als Treibmittel bei einem Sattdampf - Autoklavierungsprozess, dem ein Brennprozess folgt, zum Einsatz kommen. Die Füllstoffe und das Treibmittel erzeugen eine Makroporigkeit, die eine Alkalidampfbeständigkeit verhindern.

Weiterhin ist in Karen L. Scrivener, Alain Capmas: "Calcium Aluminates Cements", In: Peter C. Hewlett: "Chemistry of Cement and Concrete - 4th Edition", 1998, Butterworth-Heinemann, Oxford, XP002631894, ISBN: 0340565896, S. 718 - 723, das Schmelzdiagramm der CaO - Al₂O₃ - Verbindungen diskutiert. Danach bestehen nur Mischungen aus mehreren verschiedenen C/A-Kompositionen, wie CA, CA₂, C₁₂A₇ und Al₂O₃ und nach einer Sinterung auch CA₆, aber kein C₃A. Es finden also bei einer Aufheizung oder Abkühlung dieser Stoffe, jeweils Phasenum- oder Phaseneubildungen statt, die dazu fuhren, dass im Normalfall Dehnungen und Schwindungen auftreten, die Rissbildungen verursachen, die einen schädlichen Tiefenangriff von Alkalidämpfen bei hohen Temperaturen, wie sie insbesondere beim Einsatz von Müllbrennstoffen auftreten, vorbereiten. Weiterhin werden dort Calcium-Aluminium-Hydrate diskutiert und dazu festgestellt, dass sogar bei Temperaturen zwischen 10 °C und 27 °C ganz erhebliche Phasenumwandlungen von C₁₂A₇ zu CAH₁₀, C₂AH₈,C₃AH₆, C₄AH₁₃ und γ-AH₃ auftreten, die Dichten zwischen 1720 und 2520 kg/m³ aufweisen, wodurch bekanntlich entsprechend hohe Dehnungen bzw. Schwindungen und demzufolge schädliche Rissbildungen auftreten. Es ist somit in keiner Weise erkannt worden, dass es möglich sein würde, aus Calcium-Aluminat-Materialien mit jeweils einer stabilen, fast reinen Kristallform, insbesondere auch nicht aus C3A, CA, C5A3 oder C12 A7 zu schaffen, die weitgehend Phasen - und somit Dimensionsstabil wären und alkalidampfresistent sein würden.

Es ist Aufgabe der Erfindung, einen festen hochporösen alkaliresistenten Wärmedämmstoff der eingangs bezeichneten Art zu schaffen, der einen wesentlich kostengünstigeren Materialeinsatz erfordert, einfach herzustellen und für Anwendungsgrenztemperaturen im Bereich von 1000 °C bis 1300 °C geeignet ist.

Die Lösung ist im Kennzeichen des Hauptanspruchs angeben.

Die Lösungen zur Verfahrensaufgabe sind in den Ansprüchen 4 bis 6 angegeben. Das Verfahren besteht darin, dass die Mischung aus Aluminiumoxiden, Aluminiumhydroxid und/oder thermisch zersetzbaren Aluminium-Salzen und Calciumoxiden, -hydroxiden und/oder thermisch zersetzbaren Calcium-Salzen gemäß den Zusamensetzungen nach Anspruch 1 entweder mit Hochdruckwasserdampf in einem Rührautoklaven RA behandelt wird, so dass aus der Aufschlämmung ein hydrothermal autoklaviertes Granulat GA entsteht, das entweder mit bis zu 1300 °C gebrannt zu einem gebrannten Granulat GB wird oder aus ihm mit einem Bindemittel BI gemischt, in Form gebracht und getrocknet ein hydrothermal autoklavierter Granulat-Formkörper GAFK wird oder wenn sie ein Mischungsverhältnis der genannten Ausgangsstoffe entsprechend einem Mischungsverhältnis von Calciumoxid zu Aluminiumoxid wie C₁₂A₇, C₅A₃ oder CA aufweisen, mit Wasser und einem Stabilisator und Verstärkungsstoff als ein Bindemittel BI gemischt, ausgeformt und anschließend mit Hochdruckwasserdampf hydrothermal autoklaviert wird, so dass autoklavierte Formlinge FLA entstehen, die an einem Einsatzort in situ in der Feuerungsanlage oder in einer Brennkammer BR mit Temperaturen von bis 1300 °C gebrannt und gesintert werden, so dass ein einfach gebrannter Formkörper als einfach gebranntes Endprodukt EB 1 entsteht.

Als Tonerde-Rohstoffe sind insbesondere Aluminiumhydroxid, genannt Gibbsit, und Böhmit, AlO (OH), in verschiedenen Korngrößen geeignet. Als Calcium-Rohstoffe sind insbesondere Oxide und/oder Hydroxide und oder Carbonate und/oder Hydrogencarbonate von Calcium einzusetzen. Die Stöchiometrie des gewünschten Endproduktes an Calciumoxid/Aluminiumoxid ist zu beachten.

Als Stabilisierungs- und Filtrationshilfsmittel eignet sich Methylcellulose in einer Konzentration zwischen 0,3 % und 2,5 % und/oder Zellstoff in einer Konzentration zwischen 0,5 % und 8 %. Die angesetzte und gerührte Mischung wird in einer gewünschten Form bei etwa 145 °C bis 250 °C für etwa 5 h bis 24 h autoklaviert. Nach leichtem Abkühlen und Vortrocknen bei 160 °C wird der Körper bis zur Massenkonstanz nachgetrocknet.

Der neuartige mikroporöse Wärmedämmstoff mit der Zusammensetzung C₁₂A₇ oder CA vereinigt die Widerstandsfähigkeit von Calcium-Aluminat gegen Alkalidämpfe- und - schmelzen mit einer geringen Wärmeleitfähigkeit aufgrund der Porenstruktur, die durch die Nassaufbereitung der Ausgangsstoffe mit einem hohen, stabilisierten Wasseranteil im Autoklaven entsteht. Zudem erbringt die Porenstruktur den großen Vorteil, dass Kristallkeime und Phasengrenzen stets nur eine kurze Wachstumsstrecke verfügbar haben, so dass sich bei Temperaturwechselbelastungen keine tiefen Risse oder Spalten bilden können.

Das bei hohen Sintertemperaturen im Bereich zwischen 1000 °C und 1300 °C entstehende Calcium-Aluminat der Zusammensetzung C₃A stellt ein gegen die Einwirkung von heißen Alkalidämpfen widerstandsfähiges unverändertes Endprodukt dar, das einen wesentlich geringeren Valenzanteil Aluminiumoxid als das bekannte β-Aluminat hat, was zu der angestrebten erheblichen Kostenreduzierung führt.

Eine Schwindung von unter 1,5 % ergab sich je nach der Zusammensetzung der Ausgangsstoffe entsprechend C₁₂A₇ oder CA bei einer Sintertemperatur bis 1100 °C oder 1200 °C, wenn sie nach einer Abkühlung gemessen wurde. Dadurch ergibt sich die Möglichkeit, die vorgefertigten Formkörper, wie Platten, Formsteine, Rohre, Ringe usw., unmittelbar ohne einen aufwendigen Brand zur Auskleidung von Feuerungskammern und Rauchzügen zu verwenden. Die Druckfestigkeit eines getrockneten Körpers liegt je nach Formgebungsverfahren und/oder Pressdruck über 2 MPa, so dass er ohne weiteres in diesem Zustand verarbeitbar und in eine Feuerungsanlage einbaubar ist.

Bei einer Zusammensetzung der oxidischen oder hydrooxidischen Ausgangsstoffe entsprechend C₃A ergab sich bei 350 °C bis 400 °C für den Rohling bei der thermischen Behandlung eine Schrumpfung von bis zu 3,5 %, die bis 1000 °C konstant blieb. Dieses zeigt, dass hierbei eine erhebliche Gefügeschädigung auftritt. Für einen praktischen Einsatz dieses vergleichsweise besonders kostengünstigsten Materials unter den geforderten schwierigen Bedingungen ist es deshalb erforderlich, ein geschrumpftes erstgebranntes Zwischenprodukt, soweit es kein Granulat ist, zu einem solchen zu vermahlen, unter Bindemittelzusatz auszuformen und erneut zu sintern. Der durch diesen Zweitbrand entstehende Aufwand ist dem Materialkostenvorteil gegenüberzustellen.

Dieses erstgebrannte, wie auch das autoklavierte Granulat lässt sich vorteilhaft Feuerfestbeton, Feuerfestklebern, Feuerfestdichtungs- und/oder -reparaturmassen und/oder Stampfmassen zusetzen, und es lässt sich auch mit einem Bindemittel zu einem Formkörper verarbeiten und nach Trocknung, einem Zweitbrand in einer Sinterkammer oder in situ in der Feuerungsanlage unterziehen, wie im Verwendungsanspruch 7 angegeben ist.
Fig. 1
   zeigt Dilatometerkurven beim Brennen von in ihrer Zusammensetzung jeweils auf eines der drei Kernprodukte C₃A, C₁₂A₇, CA, gerichteten Ausgangsrohlings, wobei jeweils eng benachbarte Kurven von verschiedenen Ausgangsstoffen herrühren, die jedoch offensichtlich keine wesentlichen Unterschiede erbringen. Die Verläufe der C₃A-Prüflinge zeigen bei ca. 350 °C eine Schwindung infolge einer Katoit-Zersetzung. Fast ideal verhalten sich die CA-Prüflinge. Weitere Untersuchungen der Zusammensetzung der Proben nach einer Sinterung bei 1200 °C über 12 h zeigt, dass die CA-Probe zu 91 % aus CA, 8 % aus CA₂ und 1 % aus C₁₂A₇ bestand und dass die C₁₂A₇-Probe nach der Sinterung zu 91 % aus C₁₂A₇, 6 % aus CA und 3 % aus C₃A bestand. Zwischenstufen Al₂O₃-tetragonal, CaO, C₃A₅, C₅A₃, die im Laufe des Sinterprozesses auftraten, waren zum Schluss vollständig transformiert.
   Röntgenanalysen zeigten nach einem Brand bei 1200 °C über 48 h für eine CA-Probe mehr als 98 % CA und eben merklich C₁₂A₇, für eine C₁₂A₇-Probe 95 % C₁₂A₇ und etwas C₃A sowie für eine C₃A-Probe mehr als 98 % C₃A sowie wenig C₁₂A₇ und kaum Korund.
Fig. 2 und Fig. 3
   zeigen C₃A-Proben nach der Autoklavierung bzw. nach 12 h Brand bei 1100 °C in etwa 5000-facher Vergrößerung.
Fig. 4
   zeigt eine 5000-fache Vergrößerung von einer 12 h bei 1200 °C gebrannten C₁₂A₇-Probe.
Fig. 5
   zeigt 5000-fach vergrößert eine 12 h bei 1100 °C gebrannte CA-Probe.
Fig. 6
   zeigt ein Verfahrensschema mit Varianten.

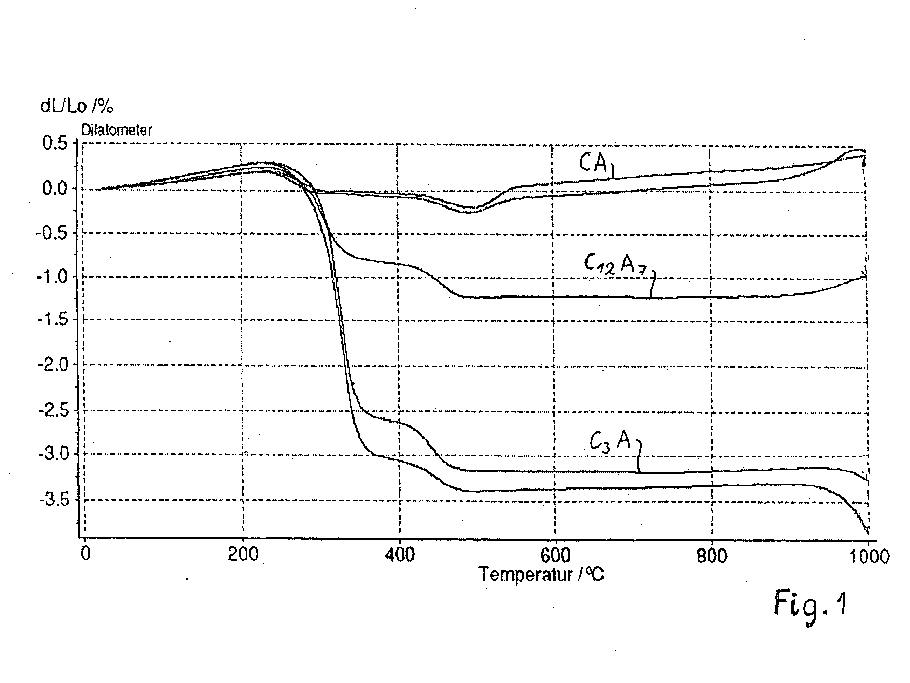

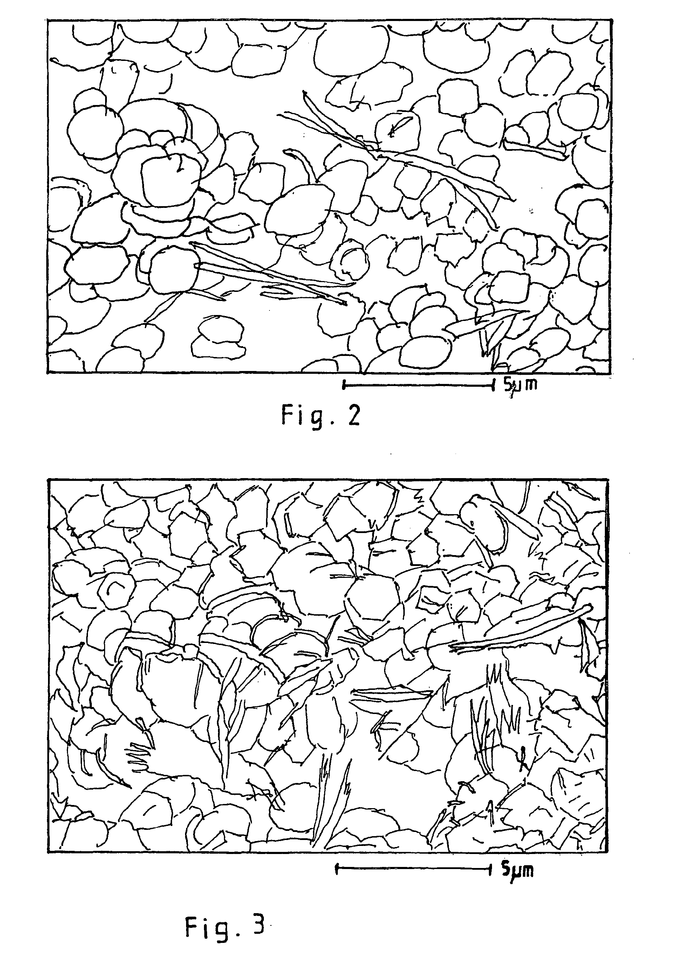

In den Fig. 2 und 3 zeigen sich überwiegend runde C₃AH₆-Kristalle und in geringen Mengen langspießiges Böhmit. Unterschiede zwischen dem autoklavierten und dem gebrannten Zustand sind kaum ersichtlich; der Anteil des Böhmits hat beim Brennen angenommen. Wesentliches Merkmal ist, dass die Katoit-Kristalle annähernd gleich groß sind, so dass zwischen ihnen das für den Wärmedämmstoff notwendige mikroporöse Gefüge besteht.

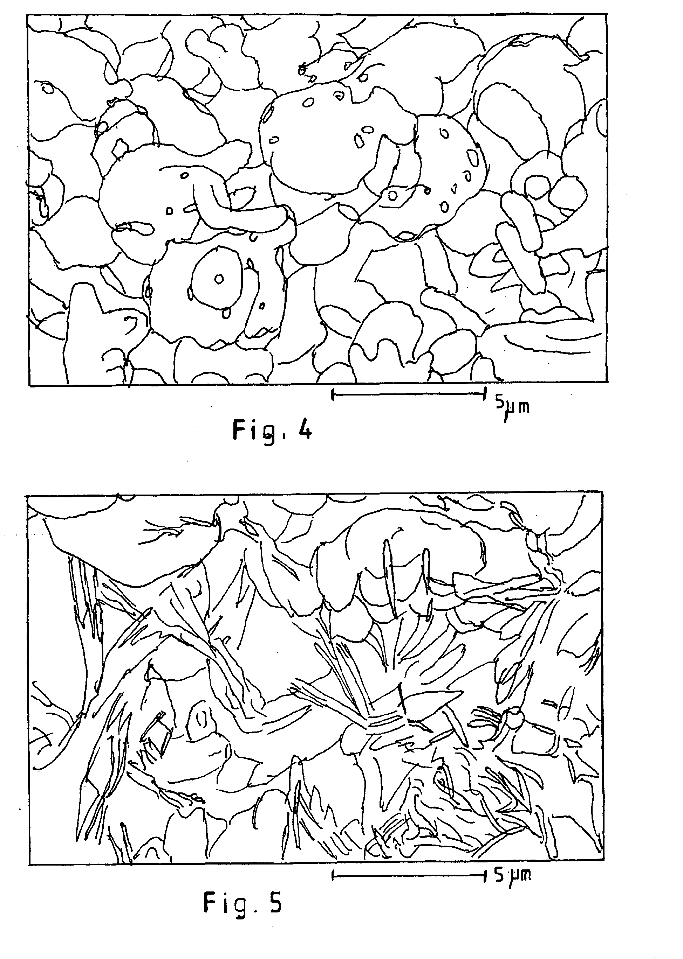

Fig. 4 zeigt das mikroporöse Grundgefüge aus den Katoit-Kristallen und den Böhmit-Nadeln. Ein größerer Hohlraum ist durch das Ausbrennen einer Zellulosefaser, des Bindestoffes, entstanden. In den Kristallen sind winzige Poren durch das Austreten von Wasser im Herstellungsverfahren entstanden.

Fig. 5 zeigt ein ähnliches Gefüge wie Fig. 4. Man erkennt den erheblich höheren Anteil stängeliger Kristalle des CA.

Die vorbeschriebenen Proben wiesen nach der Sinterung Rohdichten von 0,5 g/cm³ bis 1,2 g/cm³ und Porositäten von 60 % bis 80 % auf, so dass Wärmeleitfähigkeiten von 0,15 W/(m·K) bis 0,45 W/(m·K) erreicht wurden.

Salzkorrosionstests nach DIN 51069 wurden an den Proben mit der sogenannten Salzart 5, entsprechend gleichen Teilen K₂SO₄, KCl, K₂CO₃, sowie mit Salzart 7, entsprechend den gleichen Teilen KCl und K₂SO₄, in zu Tiegeln und Deckeln geformten Proben ausgeführt. Die Tiegel zeigten nach einem Brand bei 1000 °C über 24 h eine Salzaufnahme von 60 % bis 70 % und eine lineare Schwindung von 0,17 % bei der CA-Probe und eine Quellung von 3 % bei der C₁₂A₇-Probe. Es ergaben sich oberflächennah feine Haarrisse in den Wänden, die sich bei anschließender Lagerung durch Hydratbildung an der Luft bei dem Salzgemisch 5 infolge der Hygroskopizität des KCl noch etwas verstärkten.

Rasterelektronische Aufnahmen und EDAX-Energiedispersive Elektronenstrahlmikroanalysen zeigten, dass sich das Gefüge nur im Nahbereich des Salzkontaktes verändert hatte. Strukturveränderungen in das Innere hinein waren nicht nachweisbar. Weitere Korrosionstests wurden an Stäben aus warmfestem Stahl der Legierung 1.4828 nach DIN 17240 mit den drei Calciumaluminaten bei 1000 °C über 24 h durchgeführt, wobei nur sehr geringe Masse-, Längen- und Durchmesserveränderungen an den Stäben gemessen wurden, die in etwa denen an einer Blindprobe in Luft entsprachen.

Diese umfangreichen Materialuntersuchungen und Korrosionstests zeigen die Brauchbarkeit der vorteilhaften Wärmedämmstoffe, insbesondere für Anwendungen in Verbrennungsanlagen von stark schadstoffbelasteten Abfällen.

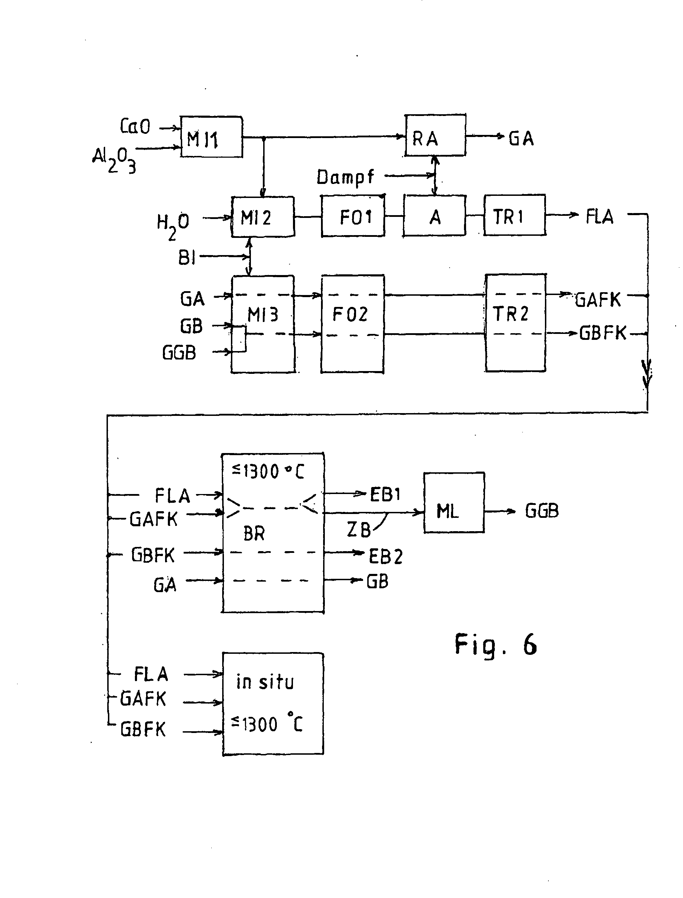

Fig. 6 zeigt ein Verfahrensschema, das je nach dem jeweils erzeugten Produkt oder den verwendeten Anlageteilen unterschiedlich durchlaufen wird.

Die pulverförmigen Ausgangsstoffe, die als CaO oder ein anderes Erdalkalioxid und als Al₂O₃ rein oder gebunden vorliegen, werden in einem ersten Mischvorgang MI1 innig vermischt und anschließend entweder in einem Rührautoklaven RA zu einem autoklavierten Granulat GA hydrothermal verarbeitet oder im weiteren Mischvorgang MI2 mit einem Bindemittel BI, aus einem Stabilisator und einem Verstärkungsstoff bestehend, sowie mit Wasser formbar gemacht und in einer Gießform und/oder einer Presse FO1 zu einem Rohling geformt, der in einem Autoklaven A mit Wasserdampf hydrothermal gebunden und anschließend in einem ersten Trockner TR1 zu einem autoklavierten Formling FLA verfestigt wird. Dieser wird entweder an einen Einsatzort verbracht in situ mit Temperaturen bis 1300 °C gebrannt oder in einer Brennkammer BR bei der genannten Temperatur zu einem einfach gebrannten Endprodukt EB1 oder einem Zwischenprodukt ZB gesintert.

Das Zwischenprodukt ZB hat insbesondere eine Zusammensetzung C₃A bis C₁₂A₇ und wird wegen einer erheblichen Schrumpfung und daraus resultierender geringer Druckfestigkeit in einer Mühle ML zu gebranntem Pulver oder Granulat GB zerkleinert.

Solches gebranntes gemahlenes Pulver oder Granulat GGB lässt sich wie das autoklavierte Granulat GA oder in der Brennkammer BR unmittelbar daraus gesintertes gebranntes Granulat GB mit Bindemittel BI durch Mischen MI3, Formen FO2 und Trocknen TR2 in einem autoklavierten Granulatformkörper GAFK bzw. gebrannten Granulatformkörper GBFK wandeln und als solcher in situ oder in der Brennkammer BR zu einem stabilen, zweifach gesinterten Endprodukt EB2 sintern.

Somit entstehen je nach dem Durchlauf der verschiedenen Produktionsschritte unter Berücksichtigung der Ausgangszusammensetzung die folgenden marktfähigen Produkte:
- autoklavierter Formling FLA
- autoklavierter Granulat-Formkörper GAFK
- gebrannter Granulat-Formkörper GBFK
- Endprodukt einfach gebrannt EB1, Formkörper
- Endprodukt zweifach gebrannt EB2, Formkörper
- autoklaviertes Granulat GA
- gebranntes Granulat GB
- gebranntes gemahlenes Granulat GGB
- gebranntes Zwischenprodukt ZB

Die Granulate GA, GB und das Mahlgut GGB werden als alkaliresistenter wärmedämmender Zusatz einem Feuerfestbeton, Feuerfestkleber, einer Feuerfest-Dichtungsmasse, Feuerfest-Reparaturmasse und/oder Feuerfest-Stampfmasse vorteilhaft beigemengt und/oder als wärmedämmendes Schüttgut und/oder mit einem Binder BI vermischt als Kleber und/oder Reparaturmasse eingesetzt. Die Korngröße des Granulats GA, GB liegt zwischen 0,5 mm bis 20 mm, und pulverisiert sind Korngrößen von 1 µm bis 500 µm je nach Anwendung vorzusehen.

Weitere Referenzzeichen:
- A: Autoklav
- RA: Rührautoklav
- MI1 - MI3: Mischvorgänge
- BI: Binder
- FO1: Formgebung der Mischung aus MI1 und MI2
- FO2: Formgebung des Granulats GA, GB aus MI3
- TR1, TR2: Trockner nach FO1 bzw. FO2
- BR: Brennkammer, Sinterkammer
- ML: Mühle, Brecher, Pulverisator

## Patentansprüche

1. Wärmedämmstoff aus porösem Calcium-Aluminat zur Verwendung in Feuerungsanlagen mit alkalischen Verbrennungsgasen einer Temperatur von 1000 °C bis 1300 °C, das eine Porosität von über 60 Vol.-% aufweist und eine Alkalibeständigkeit gemäß einem Korrosionstest nach DIN 51069 aufweist, wobei nur oberflächennahe Haarrisse auftreten, wobei der Wärmedämmstoff zu mindestens 90 % das Calcium-Aluminat, ein Calciumoxid - C genannt - und ein Aluminiumoxid - A genannt - in einem Molverhältnis Calciumoxid zu Aluminiumoxid jeweils von
- entweder:
-- 1 : 1 entsprechend einer Kristallform CA, oder
-- 1,66 : 1 entsprechend einer Kristallform C₅A₃, oder
-- 1,71 : 1 entsprechend einer Kristallform C₁₂A₇,
enthält und dieser Wärmedämmstoff als ein ungebranntes hydrothermal autoklaviertes Granulat (GA) oder ein daraus gebildeter Granulat-Formkörper (GAFK) oder ein hydrothermal autoklavierter Formling (FLA) in situ in die Feuerungsanlage oder in eine Brennkammer mit einer Temperatur von bis zu 1300 °C einzusetzen ist, wo ein einfachgebranntes Endprodukt (EB1) entsteht, oder
- das Calcium-Aluminat in einem Molverhältnis Calciumoxid zu Aluminiumoxid zu mindestens 90 % von 3 : 1 entsprechend einer Kristallform C₃A vorliegt und dieser Wärmedämmstoff aus einem hydrothermal autoklavierten und unmittelbar daraus gebrannten Granulat (GB) besteht.

2. Wärmedämmstoff nach Anspruch 1,
**dadurch gekennzeichnet, dass** seine Rohdichte 0,5 g/cm³ bis 1,2 g/cm³ beträgt,
seine Porosität bis 80 Vol.-% und seine Wärmeleitfähigkeit 0,15 W/(m·K) bis 0,45 W/(m·K) betragen.

3. Wärmedämmstoff nach Anspruch 1 oder 2,
**dadurch gekennzeichnet, dass** die Druckfestigkeit des hydrothermal autoklavierten Formlings (FLA) bei über 2 MPa liegt.

4. Verfahren zur Herstellung des Wärmedämmstoffes nach Anspruch 1,
**dadurch gekennzeichnet, dass** eine Mischung aus Aluminiumoxiden, Aluminiumhydroxid und/oder thermisch zersetzbaren Aluminium-Salzen und Calciumoxiden, -hydroxiden und/oder thermisch zersetzbaren Calcium-Salzen mit einem Mischungsverhältnis der genannten Ausgangsstoffe entsprechend einem Mischungsverhältnis von Calciumoxid zu Aluminiumoxid von mindestens 90 % wie C₁₂A₇, C₅A₃ oder CA aufweisen, mit Wasser und einem Stabilisator und Verstärkungsstoff als ein Bindemittel (BI) gemischt, ausgeformt und anschließend mit Hochdruckwasserdampf hydrothermal autoklaviert wird, so dass die autoklavierten Formlinge (FLA) entstehen, die an einem Einsatzort in situ in der Feuerungsanlage oder in einer Brennkammer (BR) mit Temperaturen von bis 1300 °C gebrannt und gesintert werden, so dass ein einfach gebrannter Formkörper als das einfach gebrannte Endprodukt (EB1) entsteht.

5. Verfahren zur Herstellung des Wärmedämmstoffes nach Anspruch 1,
**dadurch gekennzeichnet, dass** eine Mischung aus Aluminiumoxiden, Aluminiumhydroxid und/oder thermisch zersetzbaren Aluminium-Salzen und Calciumoxiden, -hydroxiden und/oder thermisch zersetzbaren Calcium-Salzen mit dem Mischungsverhältnis von Calciumoxid zu Aluminiumoxid zu mindestens 90 % für das Molverhältnis von C₃A mit Hochdruckwasserdampf in einem Rührautoklaven (RA) behandelt wird, so dass
- aus der Aufschlämmung ein hydrothermal autoklaviertes Granulat (GA) entsteht, das entweder mit bis zu 1300 °C gebrannt zu einem gebrannten Granulat (GB) wird oder
- aus ihm mit einem Bindemittel (BI) gemischt, in Form gebracht und getrocknet der hydrothermal autoklavierte Granulat-Formkörper (GAFK) wird.

6. Verfahren zur Herstellung des Wärmedämmstoffes nach Anspruch 4 oder 5, **dadurch gekennzeichnet, dass** die hydrothermale Autoklavierung bei einer Temperatur von 145 °C bis 250 °C und dem entsprechenden Druck erfolgt sowie anschließend eine Vor- und Nachtrockung erfolgen, wodurch der autoklavierte Formling (FLA) oder das autoklavierte Granulat (GA) entsteht.

7. Verwendung des Wärmedämmstoffes nach Anspruch 1,
**dadurch gekennzeichnet, dass** das autoklavierte Granulat (GA) oder das gebrannte Granulat (GB) mit einem Bindemittel (BI) gemischt als eine formbare Masse als Feuerfestdichtungs-, -reparatur- und/oder -stampfmasse dient oder als Feuerfestbeton oder als ein Feuerfestkleber aufbereitet und eingesetzt wird.

## Claims

1. Thermal insulation material composed of porous calcium aluminate for use in firing plants with alkaline combustion gases having a temperature of from 1000°C to 1300°C, which has a porosity of over 60% by volume and has an alkali resistance according to a corrosion test in accordance with DIN 51069, where only close-to-the-surface hairline cracks occur, where the thermal insulation material contains at least 90% of the calcium aluminate, a calcium oxide, referred to as C, and an aluminium oxide, referred to as A, in a molar ratio of calcium oxide to aluminium oxide of in each case
- either:
**--** 1:1 corresponding to a crystal form CA, or
-- 1.66:1 corresponding to a crystal form C₅A₃, or
-- 1.71:1 corresponding to a crystal form C₁₂A₇, and this thermal insulation material is to be installed in-situ as an unfired hydrothermally autoclaved granular material (GA) or a shaped granular material body (SGAB) formed therefrom or a hydrothermally autoclaved moulding (FLA) in the firing plant or in a combustion chamber having a temperature of up to 1300°C, forming a once-fired end product (EB1), or
- the calcium aluminate is present to an extent of at least 90% in a molar ratio of calcium oxide to aluminium oxide of 3:1, corresponding to a crystal form C₃A, and this thermal insulation material consists of a hydrothermally autoclaved and fired directly therefrom granular material (GB).

2. Thermal insulation material according to Claim 1, **characterized in that** its apparent density is from 0.5 g/cm³ to 1.2 g/cm³, its porosity is up to 80% by volume and its thermal conductivity is from 0.15 W/(m·K) to 0.45 W/(m·K).

3. Thermal insulation material according to Claim 1 or 2, **characterized in that** the compressive strength of the hydrothermally autoclaved moulding (FLA) is more than 2 MPa.

4. Process for producing the thermal insulation material according to Claim 1, **characterized in that** a mixture of aluminium oxides, aluminium hydroxide and/or thermally decomposable aluminium salts and calcium oxides, calcium hydroxides and/or thermally decomposable calcium salts having a mixing ratio of the starting materials mentioned corresponding to a mixing ratio of calcium oxide to aluminium oxide of at least 90% corresponding to C₁₂A₇, C₅A₃ or CA is mixed with water and a stabilizer and reinforcing material as a binder (BI), shaped and subsequently hydrothermally autoclaved by means of high-pressure steam so as to form the autoclaved mouldings (FLA) which are fired and sintered in-situ at a place of use in the firing plant or in a combustion chamber (BR) having temperatures of up to 1300°C so as to form a once-fired shaped body as the once-fired end product (EB1).

5. Process for producing the thermal insulation material according to Claim 1, **characterized in that** a mixture of aluminium oxides, aluminium hydroxide and/or thermally decomposable aluminium salts and calcium oxides, calcium hydroxides and/or thermally decomposable calcium salts having a mixing ratio of calcium oxide to aluminium oxide of at least 90% for the molar ratio of C₃A is treated with high-pressure steam in a stirring autoclave (SA), so that
- a hydrothermally autoclaved granular material (GA) is formed from the slurry and is either fired at up to 1300°C to give a fired granular material (GB) or
- is mixed with a binder (BI), introduced into a mould and dried to give the hydrothermally autoclaved shaped granular material body (SGAB).

6. Process for producing the thermal insulation material according to Claim 4 or 5, **characterized in that** the hydrothermal autoclaving is carried out at a temperature of from 145°C to 250°C and the corresponding pressure and predrying and after-drying are subsequently carried out to form the autoclaved moulding (FLA) or the autoclaved granular material (GA).

7. Use of the thermal insulation material according to Claim 1, **characterized in that** the autoclaved granular material (GA) or the fired granular material (GB) which is mixed with a binder (BI) as a mouldable composition serves as refractory sealing, repair and/or stamping composition or is processed and used as refractory concrete or as a refractory adhesive.

## Revendications

1. Isolant thermique en aluminate de calcium poreux destiné à être utilisé dans des installations de chauffage avec des gaz de combustion alcalins d'une température de 1000°C à 1300°C, qui présente une porosité supérieure à 60% en volume et une résistance aux alcalis selon un test de corrosion selon la norme DIN 51069, seules des fissures capillaires proches de la surface survenant, l'isolant thermique contenant à raison d'au moins 90% l'aluminate de calcium, un oxyde de calcium - appelé C - et un oxyde d'aluminium - appelé A - dans un rapport molaire d'oxyde de calcium à oxyde d'aluminium à chaque fois de
- soit :
-- 1:1 conformément à une forme cristalline CA,
ou
-- 1,66:1 conformément à une forme cristalline C₅A₃, ou
-- 1,71:1 conformément à une forme cristalline C₁₂A₇,
et cet isolant thermique étant à utiliser sous forme d'un granulat (GA) non calciné traité de manière hydrothermique dans un autoclave ou sous forme d'un corps façonné de granulat formé à partir de celui-ci (GAFK) ou sous forme d'une pièce façonnée traitée de manière hydrothermique dans un autoclave (FLA) in situ dans l'installation de chauffage ou dans une chambre de combustion présentant une température allant jusqu'à 1300°C, où il se forme un produit fini monocalciné (EB 1) soit
- l'aluminate de calcium se trouvant dans un rapport molaire oxyde de calcium à oxyde d'aluminium, à raison d'au moins 90%, de 3:1 conformément à une forme cristalline C₃A et cet isolant thermique étant constitué par un granulat traité de manière hydrothermique dans un autoclave et calciné directement à partir de celui-ci (GB).

2. Isolant thermique selon la revendication 1, **caractérisé en ce que** sa densité brute est de 0,5 g/cm³ à 1,2 g/cm³, sa porosité est de jusqu'à 80% en volume et sa conductivité thermique est de 0,15 g/(m*K) à 0,45 g/(m*K).

3. Isolant thermique selon la revendication 1 ou 2, **caractérisé en ce que** la résistance à la compression de la pièce façonnée traitée de manière hydrothermique dans un autoclave (FLA) est supérieure à 2MPa.

4. Procédé pour la production de l'isolant thermique selon la revendication 1, **caractérisé en ce qu'**on mélange un mélange d'oxydes d'aluminium, d'hydroxydes aluminium et/ou de sels d'aluminium pouvant être décomposés thermiquement et d'oxydes de calcium, d'hydroxydes de calcium et/ou de sels de calcium pouvant être décomposés thermiquement, présentant un rapport de mélange des substances de départ mentionnées correspondant à un rapport de mélange d'oxyde de calcium à oxyde d'aluminium, à raison d'au moins 90%, tel que C₁₂A₇, C₅A₃ ou CA le présentent, avec de l'eau et un stabilisant et une substance de renforcement en tant que liant (BI), on le façonne puis on le traite de manière hydrothermique dans un autoclave avec de la vapeur d'eau haute pression de telle sorte que les pièces façonnées traitées dans un autoclave (FLA) se forment, qui sont calcinées et frittées en un site d'utilisation in situ dans l'installation de chauffage ou dans une chambre de combustion (BR) à des températures allant jusqu'à 1300°C, de telle sorte qu'il se forme un corps façonné monocalciné en tant que produit fini monocalciné (EB 1).

5. Procédé pour la production de l'isolant thermique selon la revendication 1, **caractérisé en ce qu'**on traite un mélange d'oxydes d'aluminium, d'hydroxydes aluminium et/ou de sels d'aluminium pouvant être décomposés thermiquement et d'oxydes de calcium, d'hydroxydes de calcium et/ou de sels de calcium pouvant être décomposés thermiquement, présentant le rapport de mélange d'oxyde de calcium à oxyde d'aluminium, à raison d'au moins 90% dans le rapport molaire de C₃A avec de la vapeur d'eau haute pression dans un autoclave agité (RA) de telle sorte
- qu'il se forme à partir de la suspension un granulat traité de manière hydrothermique dans un autoclave (GA) qui est calciné à jusqu'à 1300°C en un granulat calciné (GB) ou
- qu'il se forme à partir de celui-ci, par mélange avec un liant (BI), mise en forme et séchage, le corps façonné de granulat traité de manière hydrothermique dans un autoclave (GAFK).

6. Procédé pour la production de l'isolant thermique selon la revendication 4 ou 5, **caractérisé en ce que** le traitement hydrothermique dans un autoclave a lieu à une température de 145°C à 250°C et à la pression correspondante et qu'ensuite un préséchage et un post-séchage ont lieu, suite à quoi la pièce façonnée traitée dans un autoclave (FLA) ou le granulat traité dans un autoclave (GA) se forme.

7. Utilisation de l'isolant thermique selon la revendication 1, **caractérisée en ce que** le granulat traité dans un autoclave (GA) ou le granulat calciné (GB), en étant mélangé avec un liant (BI), sert, sous forme de masse façonnable, de masse d'étanchéité réfractaire, masse de réparation réfractaire et/ou masse compactée réfractaire ou est transformé en béton réfractaire ou en colle réfractaire et est utilisé ainsi.
